# EUROPÄISCHE PATENTSCHRIFT

(11) **EP 2 347 878 B1**
(45) Veröffentlichungstag und Bekanntmachung des Hinweises auf die Patenterteilung: **26.12.2018**
(21) Anmeldenummer: 10015646.2
(22) Anmeldetag: 15.12.2010
(51) Int. Cl.: B29C 35/06, B29C 55/22, B29L 23/00, B29K 105/24, B29C 47/92, B29C 47/90, B29C 47/88, B29C 47/00, B29K 105/10, B29C 35/10, B29C 35/08

(54) **VERFAHREN ZUR HERSTELLUNG VON PEROXIDVERNETZTEN POLYETHYLENROHREN IN EINER EXTRUSIONSLINIE**
METHOD FOR PRODUCING PEROXIDE-NETWORKED POLYETHYLENE TUBES IN AN EXTRUSION LINE
PROCÉDÉ DE FABRICATION DE TUYAUX EN POLYÉTHYLÈNE RÉTICULÉS PAR PEROXYDE DANS UNE LIGNE D'EXTRUSION

(30) Priorität: 23.01.2010 DE 102010005509
(43) Veröffentlichungstag der Anmeldung: 27.07.2011
(60) Teilanmeldung: 16201146.4
(73) Patentinhaber: INOEX GmbH, 32547 Bad Oeynhausen (DE)
(72) Erfinder: Schmuhl, Jörg, Prof. Dr., 15711 Königs Wusterhausen (DE); Deters, Martin, 49143 Bissendorf (DE)
(74) Vertreter: Seewald, Jürgen

(56) Entgegenhaltungen:
- EP-A1- 1 800 833
- DE-A1-102007 050 939
- DE-T2- 69 622 053

## Beschreibung

Die vorliegende Erfindung betrifft ein Verfahren zur Herstellung von peroxidvernetzten Polyethylenrohren in einer Extrusionslinie gemäß dem Oberbegriff des Anspruchs 1.

Es ist bekannt, dass die Eigenschaften von Polymerisaten durch Vernetzung verbessert werden können. Peroxidvernetzte Polyethylenrohre haben gegenüber unvernetzten Rohren eine erhöhte Warmfestigkeit, eine verbesserte mechanische Festigkeit und eine erhöhte Chemikalienfestigkeit, was sie für Fußbodenheizungsrohre, Warmwasserrohre, Trinkwasserrohre etc. geeignet macht.

In der DE 696 22 053 T2 ist unter anderem eine Extrusionslinie zur Inline-Vernetzung von Polyethylenrohren beschrieben. Der Extruder dieser Linie hat einen nach oben abgewinkelten Kopf, der in einem Vernetzungsofen mündet, in den das Rohr dem zur Folge vertikal hineinextrudiert wird. Das Rohr wird im Vernetzungsofen in einer ersten Erwärmungsstrecke senkrecht nach oben geführt, dort auf einer angetriebenen Umlenkrolle um 180 Grad umgelenkt und läuft dann in einer zweiten Erwärmungsstrecke senkrecht nach unten, wo es am Auslauf des Vernetzungsofens durch eine weitere Rolle in die Horizontale umgelenkt wird und anschließend in eine Kalibrier- und Kühlstation einläuft. Auf dem Weg durch den Vernetzungsofen wird das Rohr an Infrarotstrahlern vorbeigeführt, die die für eine Vernetzung erforderliche Wärme in das Rohr einbringen. An die Kalibrier- und Kühlstation schließt sich ein Abzug an, mit dem das Rohr durch die Extrusionslinie gezogen wird, um abschließend, dem Abzug folgend, auf eine Trommel aufgewickelt zu werden.

In der DE 10 2007 050 939 A1 ist ein Vernetzungsofen beschrieben, der eine erste Erwärmungsstrecke von seinem Einlauf bis zu einer angetriebenen Umlenkrolle und eine zweite Erwärmungsstrecke von seiner Umlenkrolle bis zu seinem Auslauf aufweist. Dabei wird ein horizontal extrudiertes Rohr am Einlauf des Vernetzungsofens zunächst auf einer Rolle um 90° umgelenkt, so dass es den Vernetzungsofen über die erste Erwärmungsstrecke vertikal nach oben durchläuft, dort an der Umlenkrolle um 180° umgelenkt wird und anschließend den Vernetzungsofen in der zweiten Erwärmungsstrecke vertikal nach unten durchläuft. An einer am Auslauf des Vernetzungsofens vorgesehenen Umlenkrolle wird das Rohr wieder in die Horizontale umgelenkt.

Der extrudierte Schmelzeschlauchs quillt nach seinem Austritt aus dem Rohrkopf des Extruders auf. Um ein Rohr mit einem geforderten Nenndurchmesser produzieren zu können, muss das Rohr daher nachfolgend in der Extrusionslinie gestreckt werden. Diese Streckung hat allerdings nachteilige Folgen für den Schrumpf, der ein wesentliches Qualitätsmerkmal des Endproduktes ist. Dieser Schrumpf muss möglichst minimal sein.

Aufgabe der vorliegenden Erfindung ist es daher, ein gattungsgemäßes Verfahren zur Verfügung zu stellen, welches einen minimalen Schrumpf des produzierten Rohres gewährleistet.

Diese Aufgabe wird erfindungsgemäß mit einem Verfahren gelöst, welches die Merkmale des Anspruchs 1 aufweist.

Die erfindungsgemäße Lösung beruht auf der Erkenntnis, dass eine Streckung des Rohres in der ersten Erwärmungsstrecke einen geringeren Einfluss auf den Schrumpf des Endproduktes hat als die Streckung in der zweiten Erwärmungsstrecke. Erfindungsgemäß werden daher die Streckung in der ersten Erwärmungsstrecke und die Streckung in der zweiten Erwärmungsstrecke überwacht und so geregelt, dass die erforderliche Streckung des Rohres überwiegend in der ersten Erwärmungsstrecke erfolgt und die Streckung des Rohres in der zweiten Erwärmungsstrecke gegen Null geregelt wird.

Vorteilhafte Ausgestaltungen des erfindungsgemäßen Verfahrens ergeben sich aus den Unteransprüchen.

Die Erfindung wird nachstehend anhand von Ausführungsbeispielen näher erläutert. In der dazu gehörigen Zeichnung zeigt:
- Fig. 1: eine schematische Darstellung einer Extrusionslinie zur Herstellung von peroxidvernetzten Polyethylenrohren in einer ersten Ausführungsform,
- Fig. 2: eine schematische Darstellung einer Extrusionslinie zur Herstellung von peroxidvernetzten Polyethylenrohren in einer zweiten Ausführungsform, und
- Fig. 3: eine vergrößerte Darstellung des in der Extrusionslinie gemäß Fig. 2 eingesetzten Vernetzungsofens in Anfahrstellung.

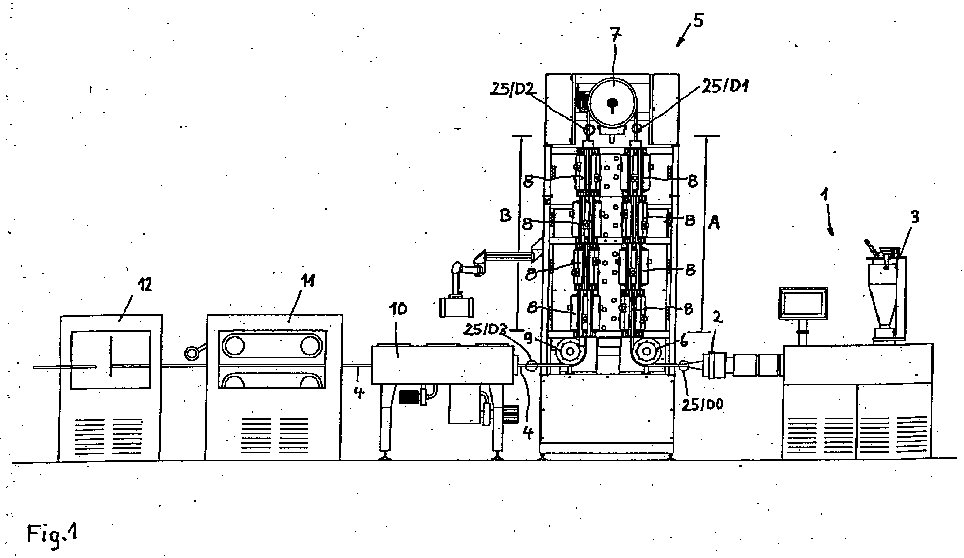

Die in Figur 1 gezeigte Extrusionslinie umfasst einen Extruder 1 mit einem Rohrkopf 2 und einem Aufgabetrichter 3. Über den Aufgabetrichter 3 werden dem Extruder 1 mittels einer nicht dargestellten Dosiereinrichtung Polyethylen in Granulat- oder Pulverform, ein Stabilisator sowie Peroxid zugeführt. Diese Mischung wird im Extruder 1 erwärmt, geknetet und plastifiziert. Anschließend wird die dadurch gebildete, formbare Masse durch einen ringförmigen Durchtrittsspalt des Rohrkopfes 2 gedrückt. Nach dem Austritt aus dem Rohrkopf 2 läuft das heiße, noch verformbare Rohr 4 in einen Vernetzungsofen 5 ein. Das horizontal extrudierte Rohr 4 wird am Einlauf des Vernetzungsofens 5 zunächst auf einer Rolle 6 um 90 Grad umgelenkt, so dass es den Vernetzungsofen 5 über eine erste Erwärmungsstrecke A vertikal nach oben durchläuft. Dort ist eine angetriebene größere Umlenkrolle 7 angeordnet, auf der das Rohr 4 um 180 Grad umgelenkt wird und anschließend den Vernetzungsofen 5 in einer zweiten Erwärmungsstrecke B vertikal nach unten durchläuft.

Die Erwärmungsstrecken A und B weisen jeweils vier aufeinander folgende Infrarotstrahlungsmodule 8 auf, über die die für eine Vernetzung erforderliche Wärme in das Rohr 4 eingebracht wird.

Am Auslauf des Vernetzungsofens 5 wird das Rohr 4 auf einer weiteren Rolle 9 um 90 Grad in die Horizontale umgelenkt. Nach dem Verlassen des Vernetzungsofens 5 läuft das Rohr 4 in eine Kalibrier- und Kühleinheit 10 ein, in der es abgekühlt wird. Der Kalibrier- und Kühleinheit 10 schließt sich in der Extrusionslinie eine Abzugseinheit 11 an, mit der das extrudierte Rohr 4 durch die Extrusionslinie gezogen wird. Den Abschluss der Extrusionslinie bildet eine Sägeeinheit 12, mit der Rohrabschnitte gewünschter Länge vom extrudierten Rohr 4 abgelängt werden.

Das extrudierte Rohr 4 (Schmelzeschlauch) quillt nach dem Austritt aus dem Rohrkopf 2 auf, so dass eine Streckung des Rohres 4 im Vernetzungsofen 5 erforderlich ist, um den gewünschten Rohrnenndurchmesser in den einzuhaltenden Toleranzgrenzen produzieren zu können. Zur Erfassung dieser Streckung sind im bzw. am Vernetzungsofen 5 vier symbolisch durch Kreise dargestellte Messstellen 25 vorgesehen, z. B. in Form von Lasersensoren, mit denen der Durchmesser D0 vor der ersten Erwärmungsstrecke A und der Durchmesser D1 nach der ersten Erwärmungsstrecke A, sowie der Durchmesser D2 vor der zweiten Erwärmungsstrecke B und der Durchmesser D3 nach der zweiten Erwärmungsstrecke B ermittelt werden. Die Streckung des Rohres 4 in der ersten Erwärmungsstrecke A ergibt sich dann aus dem Verhältnis S1 = D0/D1 und die Streckung in der zweiten Erwärmungsstrecke B aus dem Verhältnis S2 = D2/D3.

Das Rohr 4, das durch den Vernetzungsofen 5 geführt wird, wird mittels der oberen Umlenkrolle 7 durch den Vernetzungsofen 5 gezogen. Dabei wird die Geschwindigkeit, d. h. die Drehzahl der Umlenkrolle 7 in Abhängigkeit vom Massedurchsatz am Rohrkopf 2 so geregelt, dass die für den zu produzierenden Rohrnenndurchmesser erforderliche Streckung überwiegend in der ersten Erwärmungsstrecke A realisiert wird.

Durch die in der Extrusionslinie befindliche Abzugseinheit 11 kann eine von der Umlenkrolle 7 abweichende Liniengeschwindigkeit eingestellt werden. Wäre die Abzugsgeschwindigkeit größer als die Geschwindigkeit der Umlenkrolle 7, würde das Rohr 4 in der zweiten Erwärmungsstrecke B gestreckt werden. Das ist aber zu vermeiden, da diese Streckung einen negativen Einfluss auf den einzuhaltenden Schrumpf hätte. Die Geschwindigkeit der Abzugseinheit 11 wird daher durch eine Folgeregelung der durch die Umlenkrolle 7 vorgegebenen Ofengeschwindigkeit angepasst, d. h., wenn die Ofengeschwindigkeit geändert wird, folgt die Abzugsgeschwindigkeit im festen Verhältnis der Ofengeschwindigkeit. Diese Folgeregelung wird durch eine zweite Regelung überlagert, mit der die Geschwindigkeit der Abzugseinheit 11 soweit reduziert wird, dass die Streckung S2 gegen 0 geht und damit der zu erwartende Schrumpf minimiert wird.

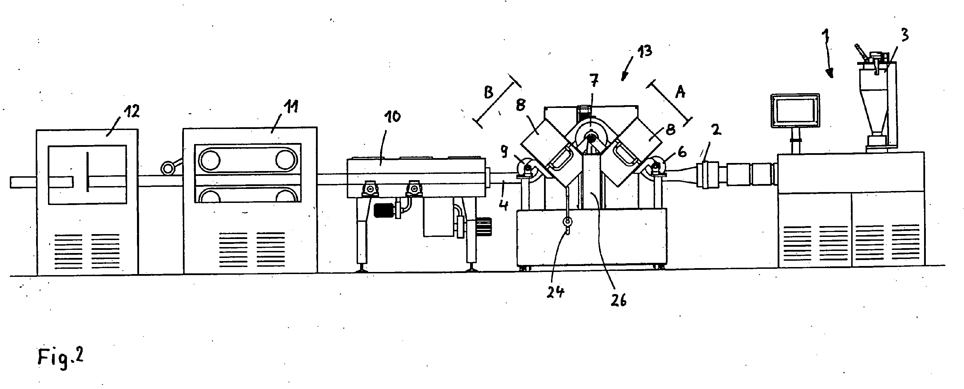

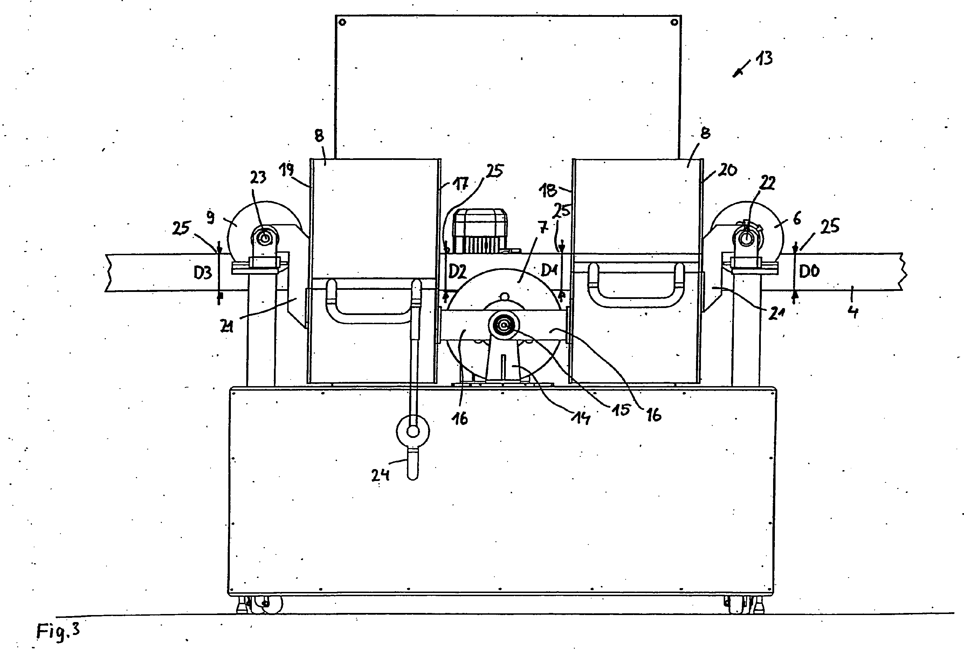

In die Figuren 2 und 3 ist ein weiteres Ausführungsbeispiel der vorliegenden Erfindung dargestellt. Es unterscheidet sich von dem vorhergehenden Ausführungsbeispiel lediglich dadurch, dass ein anderer Vernetzungsofen 13 in der Extrusionslinie eingesetzt wird. Figur 3 zeigt eine vergrößerte Darstellung dieses Vernetzungsofens 13 in seiner Anfahrstellung, während der Vernetzungsofen 13 in Figur 2 in seiner Arbeitsstellung dargestellt ist.

Ein derartiger Vernetzungsofen 13 kommt zum Einsatz, wenn Rohre 4 größeren Durchmessers, z. B. über 32 mm, produziert werden sollen, da eine Umlenkung derartiger Rohre um 180 Grad, wie in dem Vernetzungsofen 5 des vorhergehenden Ausführungsbeispiels, in der Praxis schwer zu realisieren ist.

Der Vernetzungsofen 13 wird nachstehend näher beschrieben, wobei für gleiche oder gleich wirkende Bauteile die Bezugszeichen des vorher gehenden Ausführungsbeispiels übernommen werden.

Der Vernetzungsofen 13 besitzt eine Rolle 6 am Einlauf und eine Rolle 9 am Auslauf sowie eine zwischen diesen beiden Rollen 6 und 9 angeordnete, größere und angetriebene Umlenkrolle 7. Zwischen den Rollen 6 und 7 bzw. 7 und 9 ist jeweils ein Infrarotstrahlungsmodul 8 angeordnet, wobei das zwischen den Rollen 6 und 7 angeordnete Infrarotstrahlungsmodul 8 die erste Erwärmungsstrecke A und das zwischen den Rollen 7 und 9 angeordnete Infrarotstrahlungsmodul 8 die zweite Erwärmungsstrecke B bildet.

Auch bei diesem Ausführungsbeispiel werden die Durchmesser D0, D1, D2 und D3 vor und nach der ersten Erwärmungsstrecke A bzw. der zweiten Erwärmungsstrecke B erfasst.

Die Umlenkrolle 7 bildet mit beidseitig angeordneten Lagerböcken 14 eine Drehachse 15 aus. Die beiden Lagerböcke 14 sind auf einem Hubzylinder 16 (Fig. 2) angeordnet.

Auf der Drehachse 15 der Umlenkrolle 7 sind zwei Tragarme 16 schwenkbar gelagert, die an ihren der Drehachse 15 abgewandten Enden starr mit einer jeweils zugeordneten Gehäusewand 17 bzw. 18 der Infrarotstrahlungsmodule 8 verbunden sind. Die gegenüberliegenden Gehäusewände 19 bzw. 20 der Infrarotstrahlungsmodule 8 sind ebenfalls starr mit zwei weiteren Tragarmen 21 verbundenen, deren anderen Enden schwenkbar auf den Drehachsen 22 und 23 der Rollen 6 bzw. 9 gelagert sind.

Figur 3 zeigt die Anfahrstellung des Vernetzungsofens 13, bei der das vom Extruder 1 kommende Rohr 4 horizontal durch den Vernetzungsofen 13 geführt ist.

Um die Streckung S1 und S2 gemäß dem vorhergehenden Ausführungsbeispiel regeln zu können, muss der Vernetzungsofen 13 aus seiner in Figur 3 gezeigten Anfahrstellung in eine in Figur 2 gezeigte Arbeitsstellung überführt werden. Dazu muss der Hubzylinder 16 ausgefahren werden, was durch Betätigung eines Handhebels 24 erreicht wird. Die Umlenkrolle 7 fährt dadurch in eine erhöhte Position und nimmt die Infrarotstrahlungsmodule 8 über die Tragarme 16 mit, wodurch die Infrarotbestrahlungsmodule 8 zwangsgesteuert durch die verschwenkenden Tragarme 16 und 21 synchron mit der Höhenverstellung der Umlenkrolle 7 winkelverstellt werden, so dass sie sich der durch die Höhenverstellung der Umlenkrolle 7 ergebenden Neigung des Rohres 4 anpassen.

Die Steuerung der Extrusionslinie hinsichtlich der Streckungen S1 und S2 des extrudierten Rohres 4 erfolgt wie bei dem vorhergehenden Ausführungsbeispiel.

## Patentansprüche

1. Verfahren zur Herstellung von peroxidvernetzten Polyethylenrohren in einer Extrusionslinie mit einem Extruder, einem Vernetzungsofen und einem Abzug, wobei das extrudierte Rohr einer Streckung unterzogen wird, und der Vernetzungsofen eine erste Erwärmungsstrecke von seinem Einlauf bis zu einer angetriebenen Umlenkrolle und eine zweite Erwärmungsstrecke von der Umlenkrolle bis zu seinem Auslauf aufweist, **dadurch gekennzeichnet, dass** die Streckung (S1) in der ersten Erwärmungsstrecke (A) und die Streckung (S2) in der zweiten Erwärmungsstrecke (B) überwacht und so geregelt wird, dass die erforderliche Streckung des Rohres (4) überwiegend in der ersten Erwärmungsstrecke (A) erfolgt und die Streckung (S2) des Rohres (4) in der zweiten Erwärmungsstrecke (B) gegen 0 geregelt wird.

2. Verfahren nach Anspruch 1, **dadurch gekennzeichnet, dass** zur Überwachung der Streckung (S1) in der ersten Erwärmungsstrecke (A) der Rohrdurchmesser (D0) vor der ersten Erwärmungsstrecke (A) und der Rohrdurchmesser (D1) nach der ersten Erwärmungsstrecke (A) und zur Überwachung der Streckung S2 in der zweiten Erwärmungsstrecke (B) der Rohrdurchmesser (D2) vor der zweiten Erwärmungsstrecke (B) und der Rohrdurchmesser (D3) nach der zweiten Erwärmungsstrecke (B) erfasst werden.

3. Verfahren nach Anspruch 1 oder Anspruch 2, **dadurch gekennzeichnet, dass** die Umdrehungsgeschwindigkeit der Umlenkrolle (7) so geregelt wird, dass eine optimale Streckung (S1) in der ersten Erwärmungsstrecke (A) erfolgt.

4. Verfahren nach Anspruch 3, **dadurch gekennzeichnet, dass** eine Folgeregelung der Geschwindigkeit der Abzugseinheit (11) im festen Verhältnis zur Umdrehungsgeschwindigkeit der Umlenkrolle (7) erfolgt.

5. Verfahren nach Anspruch 4, **dadurch gekennzeichnet, dass** der Folgeregelung der Abzugseinheit (11) eine zweite Regelung überlagert wird, wodurch die Geschwindigkeit der Abzugseinheit (11) soweit reduziert wird, dass die Streckung (S2) in der zweiten Erwärmungsstrecke (B) gegen 0 geht.

## Claims

1. Method for the manufacture of peroxide-cured polyethylene tubes in an extrusion line having an extruder, a curing furnace and a hood, wherein the extruded tube is subjected to a stretching and the curing furnace has a first heating stretch from its inlet to a driven guide roller and a second heating stretch from the guide roller to its outlet, **characterised in that** the stretching (S1) in the first heating stretch (A) and the stretching (S2) in the second heating stretch (B) are monitored and regulated such that the necessary stretching of the tube (4) is mostly achieved in the first heating stretch (A) and the stretching (S2) of the tube (4) in the second heating stretch (B) is regulated against 0.

2. Method according to Claim 1, **characterised in that** the tube diameter (D0) before the first heating stretch (A) and the tube diameter (D1) after the first heating stretch (A) are recorded to monitor the stretching (S1) in the first heating stretch (A) and the tube diameter (D2) before the second heating stretch (B) and the tube diameter (D3) after the second heating stretch (B) are recorded to monitor the stretching (S2) in the second heating stretch (B).

3. Method according to either Claim 1 or 2, **characterised in that** the rotation speed of the guide roller (7) is regulated such that optimal stretching (S1) is achieved in the first heating stretch (A).

4. Method according to Claim 3, **characterised in that** a subsequent regulation of the speed of the hood unit (11) is carried out in a fixed ratio to the guide roller (7).

5. Method according to Claim 4, **characterised in that** a second regulation is superimposed on the subsequent regulation of the hood unit (11) resulting in the speed of the hood unit (11) being reduced such that the stretching (S2) in the second heating stretch (B) is against 0.

## Revendications

1. Procédé de fabrication de tuyaux en polyéthylène vulcanisé au peroxyde dans une ligne d'extrusion avec une extrudeuse, un four de vulcanisation et un extracteur, le tuyau extrudé étant soumis à un étirage et le four de vulcanisation présentant une première zone chauffante s'étendant de son entrée jusqu'à sa poulie de renvoi entraînée et une seconde zone chauffante s'étendant depuis la poulie de renvoi jusqu'à sa sortie, **caractérisé par** la surveillance et le réglage de l'étirage (S1) dans la première zone chauffante (A) et de l'étirage (S2) dans la seconde zone chauffante (B), de manière que l'étirage nécessaire du tuyau (4) ait lieu principalement dans la première zone chauffante (A) et que l'étirage (S2) du tuyau (4) soit réglé à près de 0 dans la seconde zone chauffante (B).

2. Procédé suivant la revendication 1, **caractérisé en ce que,** pour la surveillance de l'étirage (S1) dans la première zone chauffante (A), le diamètre de tuyau (D0) est capté en amont de la première zone chauffante (A) et le diamètre de tuyau (D1) est capté en aval de la première zone chauffante (A), et, pour la surveillance de l'étirage S2 dans la seconde zone chauffante (B), le diamètre de tuyau (D2 est capté en amont de la seconde zone chauffante (B) et le diamètre de tuyau (D3) est capté en aval de la seconde zone chauffante (B).

3. Procédé suivant la revendication 1 ou 2, **caractérisé en ce que** la vitesse de rotation de la poulie de renvoi (7) est réglée de manière qu'un étirage (S1) optimal ait lieu dans la première zone chauffante (A).

4. Procédé suivant la revendication 3, **caractérisé en ce que** qu'un réglage en cascade de la vitesse de l'unité d'extraction (11) a lieu dans une proportion constante par rapport à la vitesse de rotation de la poulie de renvoi (7).

5. Procédé suivant la revendication 4, **caractérisé en ce qu'**un second réglage est superposé au réglage en cascade de l'unité d'extraction (11), ce qui diminue la vitesse de l'unité d'extraction (11) au point que l'étirage (S2) soit près de 0 dans la seconde zone chauffante (B).
